# EUROPEAN PATENT APPLICATION

(11) **EP 4 451 079 A1**
(43) Date of publication of application: **23.10.2024**
(21) Application number: 23169310.2
(22) Date of filing: 21.04.2023
(51) Int. Cl.: G05B 23/02

(54) **DETERMINING DEPENDENCIES FOR IMPROVED FAULT ANALYSIS IN INDUSTRIAL PLANTS**

(71) Applicant: ABB SCHWEIZ AG, 5400 Baden (CH)
(72) Inventor: RODRIGUEZ, Pablo, 68549 Ilvesheim (DE); KOZIOLEK, Heiko, 76227 Karlsruhe (DE); BURGER, Andreas, 76356 Weingarten (DE)
(74) Representative: Maiwald GmbH

(57) **Abstract**

A computer-implemented method (100) for determining the dependency of a given piece (2) of operational technology, OT, equipment in a given industrial plant (1) on information technology, IT, equipment (4), comprising the steps of:
• querying (110), from a distributed control system, DCS, of the industrial plant (1), which of a plurality of controllers (3) is responsible for the piece of OT equipment (2);
• determining (120), from a representation (4a) of the information technology, IT, landscape of the industrial plant (1), pieces (4) of IT equipment on which the correct functioning of the controller (3) is dependent; and
• determining (130) these pieces (4) of IT equipment as the subset (5) of the IT landscape on which the given piece of OT equipment (2) depends.

## Description

### FIELD OF THE INVENTION

The invention relates to the monitoring and fault diagnosis in industrial plants where operational technology, OT; is dependent on information technology, IT.

### BACKGROUND

In an industrial plant that executes a process, operation technology, OT, equipment physically interacts with the execution of the process. For example, valves control the flow of substances through the plant, heaters control the temperature of substances, and stirrers serve to mix different substances. Many plants use distributed control systems, DCS, with a superordinate management system and lower-level controllers. The superordinate management system decides, for example, over set-points at which certain properties in the process (such as a temperature or a pressure) need to be kept. The lower-level controllers then actuate the OT equipment in a manner that the property of interest is kept at the set-point.

The operation of an industrial plant in this manner requires much information technology, IT, infrastructure, such as communication networks. EP 2 823 366 B1 discloses a method for visualizing a communication network interconnecting technical equipment of an industrial plant.

### OBJECTIVE OF THE INVENTION

It is an objective of the present invention to facilitate the diagnosis and remedy of faults in an industrial plant with a distributed control system and a mix of operation technology, OT, and information technology, IT.

This objective is achieved by the method according to the independent claim. Further advantageous embodiments are detailed in the dependent claims.

### DISCLOSURE OF THE INVENTION

The invention provides a computer-implemented method for determining the dependency of a given piece of operational technology, OT, equipment in a given industrial plant on information technology, IT, equipment.

In particular, OT equipment is any equipment that physically interacts with the execution of the industrial process, such as pumps, motors, valves, stirrers, sensors or other field devices. OT equipment also includes lower-level controllers that directly communicate with field devices. Such communication is usually performed via I/O channels. IT equipment is any equipment that processes, stores and transports data without directly causing a physical interaction with the execution of the industrial process, such as network components that allow communication between the superordinate management system and the lower-level controllers, databases or other data sources from where the lower-level controllers get data, or hardware platforms hosting software-defined controllers.

In the course of the method, it is queried, from a distributed control system, DCS, of the industrial plant, which of a plurality of controllers is responsible for the given piece of OT equipment. Typically, each piece of OT equipment is served by exactly one controller. There may be higher-level controllers interacting with that controllers, but the final control input into the piece of OT equipment is usually a point-to-point connection to a particular I/O channel of one controller.

From a representation of the information technology, IT, landscape of the industrial plant, pieces of IT equipment on which the correct functioning of the controller is dependent are then determined. The representation of the IT landscape may be in any suitable machine-readable form. For example, the representation may be a graph of the IT network, with edges representing physical point-to-point connections and nodes representing devices at the respective ends of such point-to-point connections.

The representation of the IT landscape may be obtained in any suitable manner. For example, using the system specification of control system based on modeling languages (such as TOSCA or CAMP), an orchestrator program can deploy software components the available computer hosts based on their requirements. The final deployment state registered in the orchestrator program resembles the current state of the IT topology. This representation contains a set of configured nodes and the running software components as well as status and monitoring information (running, stopped, faulted ...).

In particular, using information from the system specification and discovery mechanisms (such as LLDP or SSDP/Redfish) a network topology with hosts routers, switches, and cabling may be created.

The pieces of IT equipment on which the correct functioning of the controller is dependent are determined as the subset of the IT landscape on which the given piece of OT equipment depends. This is based on the technical consideration that the correct functioning of the controller that is responsible for the given piece of OT equipment is an indispensable part of the correct functioning of the OT equipment: Even if the piece of OT equipment itself is working properly, it will do nothing unless instructed by its controller. The combination of the controller and the OT equipment makes the OT equipment fulfil its intended function in the industrial plant.

The controller is in turn dependent on more IT resources. For example, set-point values at which certain quantities or properties of the plant are to be kept need to come from a superordinate management system in the DCS. Also, the control software in the controller may need access to other data sources in the industrial plant. If the controller is not getting the data on which it bases its control decisions, any further control decisions may be based on outdated and/or incorrect information. By virtue of this, the controller, and the pieces of OT equipment for which this controller is responsible, can be regarded as not functional.

The automated analysis of these dependencies greatly facilitates the troubleshooting in the industrial plant. A primary task for plant operators is to watch for, and attend to, alarms that occur in OT equipment. Such an alarm initially suggests that there is something wrong with this particular piece of OT equipment. But due to the mentioned complex interdependency between OT and IT, the root cause may sit somewhere in the IT domain. For example, a temporary non-availability of a single datum that is required for computation of the control output to the piece of OT equipment may be such a root cause.

Also, the analysis facilitates the maintenance of IT equipment because it can be checked whether a temporary non-availability of a piece of IT equipment will cause any piece of OT equipment that is currently critical for the execution of the industrial process to become non-functional. Many industrial processes are being executed in different phases, and in these different phases, different subsets of the OT equipment may be critical.

In older industrial plants, the interdependencies between OT and IT could be considered static because all components were hard-wired to a network and always stayed in the same place in the network during operation of the industrial plant. But there are a number of reasons why, in newer plants, the interdependencies can no longer be considered static. For example, the functionality of lower-level controllers is now frequently embodied in control software that can be easily updated. If such an update causes the control software to use input from one more data source, then the correct functioning of the control software also depends on the availability of this data source. Also, control software and other software are not always statically bound to particular hardware platforms. For example, such software may be containerized and marshalled to an execution environment that runs on some hardware platform where the required processing capacity is currently available. All these dynamic changes are impossible to keep track of manually.

The method may exploit any kind of system specification of the DCS that is available for the plant. In particular, such a specification may comprise the following entities and requirements (e.g., in TOSCA, CAMP or other notation):
- Control functions: A control function controls a set of actuators in the production process based on sensor data . In the system specification, a control function it is described as a group of function blocks with input (=sensor) and output (=actuator) signals and corresponding tag names. It must specify the required function block execution engine, as well as CPU and memory requirements and configuration options.
- Execution services: software components to be hosted on computers and designed for the execution of function blocks. An execution service must be specified with he required processor architecture, operating system, as well as CPM and memory requirements, so that an orchestration program can deploy it accordingly.

The Orchestrator uses the TOSCA specification to deploy applications and configure the available hardware. Only at runtime the final details of the control system are known, and therefore, it is advantageous to determine dependencies of pieces of OT equipment on pieces of IT equipment at runtime. In particular, one or more of the following information sources may be exploited for this:
- the TOSCA specification;
- the Orchestrator;
- P&ID data (DEXPI);
- plant diagrams (DEXPI, NLP);
- live data from the process (OPC UA);
- status information from the control system; and
- the network topology.

For example, the network topology may be determined based on one or more of the following information sources:
- information about the node discovery process done by the Orchestrator
- Network details included in TOSCA specification;
- YANG models for network Topologies; and
- network discovery data obtained using LLDP.

In a particularly advantageous embodiment, a piece of OT equipment that is in an alarmed and/or nonfunctional state is chosen as the piece of OT equipment whose dependencies on IT equipment are determined. The pieces of IT equipment in the determined subset of the IT landscape on which the piece of OT equipment is dependent are then determined as potential causes for the alarmed and/or nonfunctional state of the piece of OT equipment. This allows for a quick check whether the problem that was initially discovered on the OT side is actually an OT problem or whether this problem rather has a root cause on the IT side. Typically, the IT landscape of the industrial plant will be too big to exhaustively investigate it for problems that might be causing the current OT problem at hand. The sheer number of pieces of IT equipment, such as switches, routers, hardware platforms and physical network connections, is too high to arrive at a result in a reasonable amount of time. Besides, the search for the root cause might be thrown off course if a problem on the IT side is discovered, but this is not related to the current OT problem at hand. For at least these reasons, it is advantageous to determine a subset of the IT landscape on which the given piece of OT equipment depends at all.

In particular, at least one remedial action may be performed on at least one of the pieces of IT equipment in the set of potential causes. The goal of such a remedial action is to restore functionality of the respective piece of IT equipment, so that in turn the controller that is responsible for the piece of OT equipment get access to all IT resources it needs. Some remedial actions may be performed even without a check whether the concrete piece of IT equipment is actually nonfunctional. For other remedial actions, it may be more beneficial to perform such a check first.

Examples for remedial actions include:
- rebooting, resetting and/or reconfiguring the piece of IT equipment;
- switching over to a redundant instance of the piece of IT equipment; and
- outputting an instruction to an operator of the industrial plant to replace the piece of IT equipment.

In a further particularly advantageous embodiment, a diagnostic action is performed on at least one piece of IT equipment from the set of potential causes. If the result of this diagnostic action is that the piece of IT equipment is functional, this piece of IT equipment may be deleted from the set of potential causes. The diagnostic action may be of any suitable depth. A cursory check may, for example, test whether the piece of IT equipment is responsive, and/or check whether this piece of IT equipment is raising any alarms or reporting any problems. A more in-depth check may, for example, cause the piece of IT equipment to execute a self-test routine, and/or provide it with some test input or challenge and determine whether this elicits some to-be-expected response.

In a further particularly advantageous embodiment, for at least one piece of IT equipment in the set of potential causes, at least one further piece of IT or OT equipment whose correct functioning is dependent on the at least one piece of IT equipment is determined. It is then determined whether this further piece of IT or OT equipment is functioning correctly. If this is the case, then the one piece of IT equipment in the set of potential causes that is currently being investigated is proven to be functional. It is therefore deleted from the set of potential causes. If the one piece of IT equipment that is currently being investigated were nonfunctional, then the further piece of IT or OT equipment that is dependent on it could not be functional. Every piece of IT equipment that is excluded from the set of potential causes helps to better focus the further diagnostic effort on the remaining potential causes.

In another particularly advantageous embodiment, for at least one piece of IT equipment in the set of potential causes, at least one further piece of IT equipment on which the correct functioning of the at least one piece of IT equipment is dependent is determined. It is then determined whether this further piece of IT equipment is functioning correctly. If this is not the case, then the at least one piece of IT equipment that is currently being investigated is deleted from the set of potential causes. The reason is that, if a prerequisite for the correct functioning of the piece of IT equipment that is currently being investigated is not met, this alone is reason enough for this piece of IT equipment not to function. That is, the piece of IT equipment that is currently being investigated cannot be the root cause of the current OT problem at hand. If there is a root cause on the IT side, it must be further upstream.

As discussed before, the controller need not be implemented in hardware, but can also be embodied in software. If this is the case, this creates additional dependencies on pieces of IT equipment. Therefore, in a further particularly advantageous embodiment, the controller comprises software running on a compute instance. The pieces of IT equipment on which the correct functioning of the controller is dependent comprise at least the hardware platform on which this compute instance is running and a network connection of the compute instance.

In a further particularly advantageous embodiment, the set of possible causes is ordered by the probabilities of the respective pieces of IT equipment failing. Knowledge about these probabilities can come from any suitable source. In this manner, the time required to track down the root cause of a problem is reduced.

In one example, the probabilities of pieces of IT equipment failing may be determined based at least in part on maintenance histories, and/or failure histories, of these pieces of IT equipment. For example, if a particular piece of IT equipment has had problems in the past, this makes it more probable that this piece of IT equipment is again the culprit for a problem.

When determining on which pieces of IT equipment the correct functioning of the controller responsible for a certain piece of OT equipment depends, any suitable relationship between the controller, the piece of OT equipment and the pieces of IT equipment may be exploited.

For example, if pieces of IT equipment are needed for the controller to be able to obtain data from any required data source, then the correct functioning of the controller may be deemed to depend on these pieces of IT equipment. Without the required data, it is not guaranteed that the controller can compute decisions that are in fact appropriate in the situation at hand.

In another example, if pieces of IT equipment are needed for the controller to contact any piece of OT equipment for which it is responsible, then the correct functioning of the controller may be deemed to depend on these pieces of IT equipment. The industrial process that is being executed on the plant cannot benefit from the computation of a control output that is being computed on the controller if this control output does not reach the OT equipment.

In another example, if pieces of IT equipment are needed for the controller to communicate with a superordinate management system in the DCS, then the correct functioning of the controller may be deemed to depend on these pieces of IT equipment. If the controller cannot receive new set-point values or other instructions from the DCS, its control decisions may be based on information that is no longer accurate. Likewise, if the controller cannot report any sensor data or other information from the industrial process back to the DCS, the DCS may be basing its higher-level control decisions on outdated information from the plant.

In another particularly advantageous embodiment, at least one hyperlink from at least one piece of OT equipment in a representation of the OT landscape to at least one piece of IT equipment in the representation of the IT landscape on which this OT equipment depends is created. In this manner, these dependencies are made easier accessible starting from the piece of OT equipment. For example, in response to determining that a piece of OT equipment is not functional, the tree of dependencies on pieces of IT equipment may be automatically crawled in search for the root cause. But the dependencies may also be visualized to aid troubleshooting of the problem by a plant operator.

The representation of the OT landscape may be created in any suitable manner. For example, using the specification of the control functions and signals in the system specification (e.g., TOSCA / CAMP notation) a functional view of the process may be created. This functional view may be enriched with P&ID information (e.g., DEXPI/IS015926 or AutomationML/IEC62714 notation) to create a representation of the process components (e.g., motors, tanks, etc.) and pipes related to the control function including measurement values from the process.

Using the final deployment state (done by the orchestrator program), an allocation view may be created that shows which control functions are running on computer hosted services and also the respective status and performance information.

Using spatial information form CAD tools (such as SmartPlant or eBASE), a view showing the location details of the devices of the system may be created. In particular, spatial information may be extracted from CAD diagrams using standard formats as DEXPI/ISO15926 or by using NLP (natural language processing) techniques on textual specifications.

A representation of the OT landscape may, for example, comprises control functions and their respective input and output signals. It is possible to add graphical information from the P&IDs. To create this representation, the information available from the control functions regarding Tags and signals may be checked in TOSCA and crosschecked with the information contained in the P&IDs and engineering information (PLC Open). An algorithm may match the names of entities in both databases and thereby identify areas within the P&IDs that match with the tags and signals in the system specification. It can then include these areas in the representation. An extension of the Topology view may include details about the relation of control functions on hardware and services and performance information, thereby creating an allocation view.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for determining the dependency of a given piece 2 of operational technology, OT, equipment in a given industrial plant 1 on information technology, IT, equipment 4;
Figure 2: Exemplary industrial plant 1 with sub-division into units 10, 20, 30 for which different controllers 3, 3', 3" are responsible;
Figure 3: Exemplary hyperlinks 7 between representation 2a of OT landscape and representation 4a of IT landscape in the industrial plant 1 shown in Figure 2.

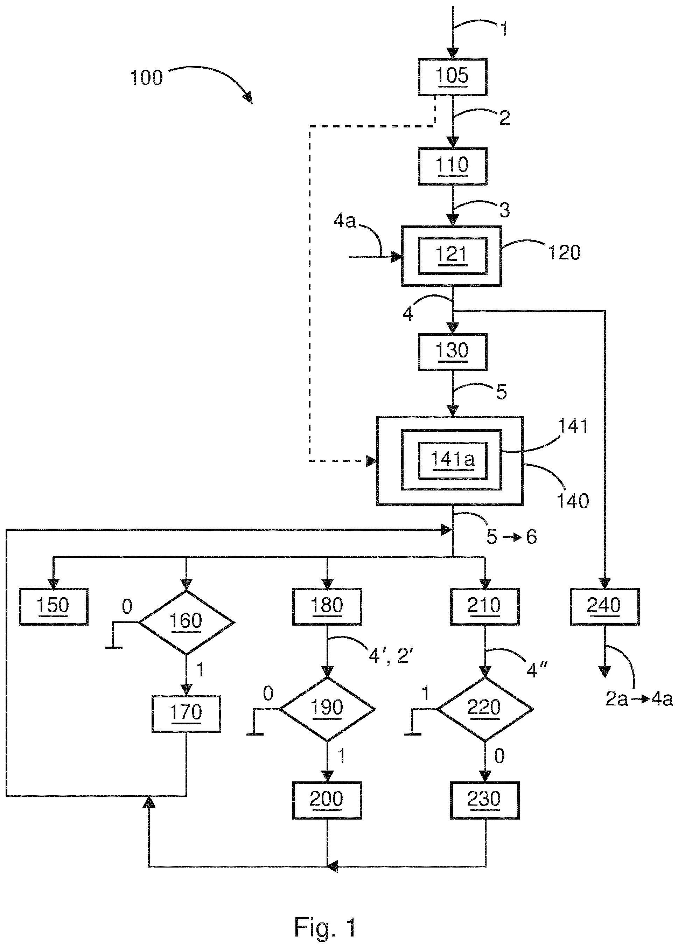

Figure 1 is a schematic flow chart of an exemplary embodiment of the method 100 for determining the dependency of a given piece 2 of operational technology, OT, equipment in a given industrial plant 1 on information technology, IT, equipment 4.

In step 105, a piece 2 of OT equipment that is in an alarmed and/or nonfunctional state is chosen for the investigation of its dependencies on pieces 4 of IT equipment.

In step 110, it is queried, from a distributed control system, DCS, of the industrial plant 1, which of a plurality of controllers 3 is responsible for the piece of OT equipment 2.

In step 120, from a representation 4a of the information technology, IT, landscape of the industrial plant 1, pieces 4 of IT equipment on which the correct functioning of the controller 3 is dependent are determined.

According to block 121, pieces 4 of IT equipment on which the correct functioning of the controller 3 is dependent may comprise pieces 4 of IT equipment that:
- are needed for the controller 3 to be able to obtain data from any required data source; and/or
- are needed for the controller 3 to contact any piece 2 of OT equipment for which it is responsible; and/or
- are needed for the controller 3 to communicate with a superordinate management system in the DCS.

In step 130, the determined pieces 4 of IT equipment are determined as the subset 5 of the IT landscape on which the given piece 2 of OT depends.

In step 140, the pieces 4 of IT equipment in the determined subset 5 are determined as potential causes 6 for the alarmed and/or nonfunctional state of the piece 2 of OT equipment.

According to block 141, the set of possible causes 6 may be ordered by the probabilities of the respective pieces 4 of IT equipment failing. According to block 141a, the probabilities of pieces 4 of IT equipment failing may be determined based at least in part on maintenance histories, and/or failure histories, of these pieces 4 of IT equipment.

The pieces 4 of IT equipment in the set of possible causes 6 may now be treated in any of the following suitable manners to troubleshoot the problem of the

In step 150, at least one remedial action may be performed on at least one of the pieces 4 of IT equipment in the set 6 of potential causes.

In step 160, a diagnostic action may be performed on at least one piece 4 of IT equipment in the set of potential causes 6 to determine whether this piece 4 of IT equipment is functional. If this is the case (truth value 1), in step 170, this piece 4 of IT equipment may be deleted from the set 6 of potential causes.

In step 180, for at least one piece of IT equipment 4 in the set of potential causes 6, at least one further piece 4', 2' of IT or OT equipment whose correct functioning is dependent on the at least one piece 4 of IT equipment may be determined. In step 190, it may then be determined whether this further piece 4', 2' of IT or OT equipment is functioning correctly. If this is the case (truth value 1), in step 200, the at least one piece 4 of IT equipment that is currently being investigated may be deleted from the set of potential causes 6.

In step 210, for at least one piece 4 of IT equipment in the set of potential causes 6, at least one further piece 4" of IT equipment on which the correct functioning of the at least one piece 4 of IT equipment is dependent may be determined. In step 220, it may then be determined whether this further piece 4" of IT equipment is functioning correctly. If this is not the case (truth value 0), in step 230, the at least one piece 4 of IT equipment that is currently being investigated may be deleted from the set of potential causes 6.

In step 240, at least one hyperlink 7 from at least one piece 2 of OT equipment to at least one piece 4 of IT equipment in the representation 4a of the IT landscape on which this piece 2 of OT equipment depends may be inserted into a representation 2a of the OT landscape of the industrial plant 1 to facilitate further troubleshooting.

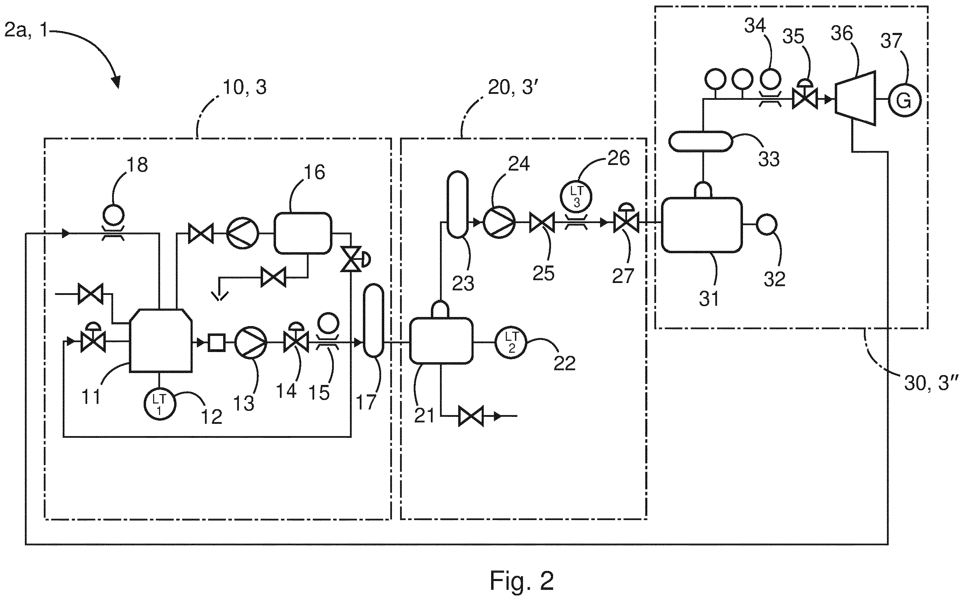

Figure 2 shows the steam-water cycle in a power plant as an exemplary industrial plant 1 on which the method 100 may be applied.

The steam-water cycle is divided into three sections 10, 20 and 30. Section 10 relates to the condensing of water from cooled steam and is controlled by a first controller 3. Section 20 relates to the preparing of feed water for the production of steam and is controlled by a second controller 3'. Section 30 relates to the production of steam and the generation of electrical power.

Section 10 comprises a condenser 11 in which steam from the power plant is supposed to condense. The level of condensate is measured using a level sensor 12. A condensate pump 13 imparts pressure on the condensate. The flow of condensate is controlled by a control valve 14 and measured with the flow sensor 15. Excess condensate is buffered in a buffer 16. Condensate that is to be processed into feed water is heated by heater 17. Section 10 ingests steam from turbine 36. The flow of this steam is measured by flow meter 18. The controller 3 may, for example, actuate the condensate pump 13 and the condensate control valve 14 in order to keep a quantity of interest, such as the level of condensate in the condenser 11, the flow of condensate, or the flow of steam, at a desired set-point.

Section 20 comprises a deaerator 21, in which the level of water is monitored by level sensor 22. The water can be heated by heater 23. A feed water pump 24, a feed water discharge valve 25 and a feed water control valve 27 control the flow of feed water made from condensate. This flow is measured by flow meter 26. The controller 3' may, for example, actuate the feed water pump 24, the feed water discharge valve 25 and the feed water control valve 27 to keep the flow of feed water at a desired set-point.

Section 30 comprises a steam generator 31, in which the level of feed water is monitored by level sensor 32. The steam may be further heated by heater 33. The flow of steam, which is monitored by flow meter 34, into the turbine 36 is controlled by steam control valve 35. The turbine 36 drives a generator 37. The controller 3" may, for example, be controlled to keep the amount of power generated by the generator 37 at a desired set-point.

The set-point values are obtained from a superordinate management system. This superordinate management system also takes care of the interdependencies between the sections 10, 20 and 30. For example, the deaerator cannot process more water than delivered by section 10.

Figure 2 shows a pure representation 2a of the OT landscape of the power plant 1. From this representation, it cannot be discerned which pieces 4 of IT equipment might be responsible if any one of the pieces 11-37 of OT equipment stops working. According to the method 100 described above, such dependencies are automatically determined, which greatly facilitates the troubleshooting.

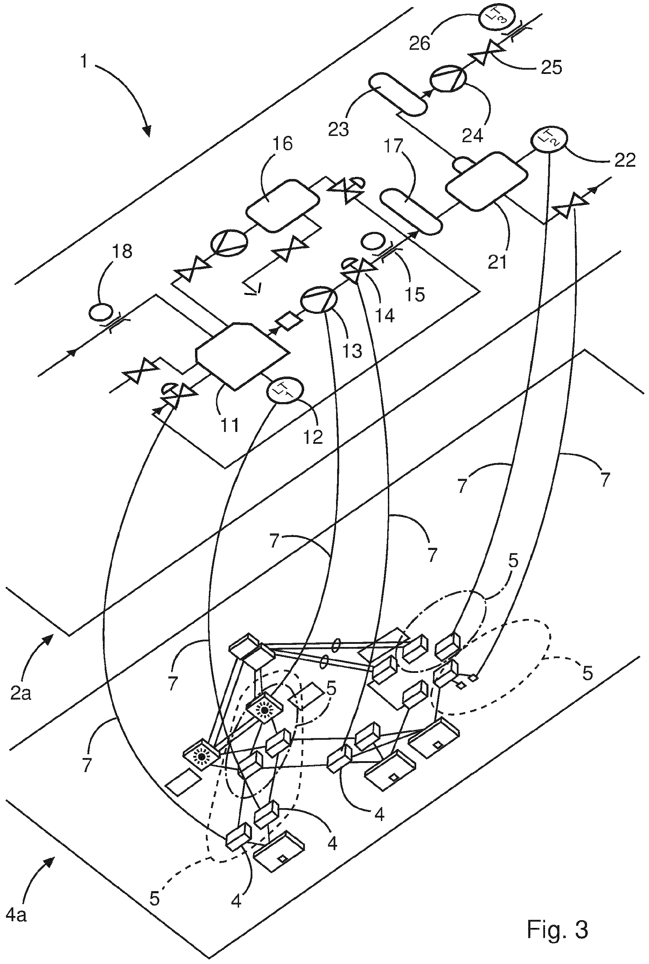

For the industrial plant 1 shown in Figure 2, Figure 3 shows some exemplary hyperlinks 7 from the representation 2a of the OT landscape to the representation 4a of the IT landscape. Each hyperlink 7 leads from a piece 11-26 of OT equipment in the representation 2a of the OT landscape to a piece 4 of IT equipment in the representation 4a of the IT landscape. Thus, if a piece 11-26 of OT equipment stops working, it may be determined which piece 4 of IT equipment the functioning of the piece 11-26 of OT equipment depends on. If one of these prerequisites is not met, this may be the root cause for the non-functioning state of the piece 11-26 of OT equipment. Each piece 4 of IT equipment is part of a subset 5 of the IT landscape on which the respective piece 11-26 of OT equipment depends. For clarity, in Figure 3, only four of the six subsets 5 are drawn.

### List of reference signs:

- 1: industrial plant
- 2, 2': piece of OT equipment
- 2a: representation of OT landscape of industrial plant 1
- 3, 3', 3": controller responsible for piece 2 of OT equipment
- 4: piece of IT equipment needed for correct operation of controller 3
- 4a: representation of IT landscape of industrial plant 1
- 5: subset of IT landscape on which piece 2 of OT equipment depends
- 6: potential causes of alarm/non-function of piece 2 of OT equipment
- 7: hyperlink from OT equipment 2 to IT equipment 4
- 10: condensate processing section of industrial plant 1
- 11: condenser
- 12: level sensor for condenser 11
- 13: condensate pump
- 14: condensate control valve
- 16: buffer for excess condensate
- 17: heater
- 18: flow sensor for steam
- 20: feed water processing section of industrial plant 1
- 21: deaerator
- 22: level sensor for deaerator 20
- 23: heater
- 24: feed water pump
- 25: feed water discharge valve
- 26: flow meter for feed water flow
- 27: feed water control valve
- 30: steam generating section of industrial plant 1
- 31: steam generator
- 32: level sensor for drum of steam generator 31
- 33: heater
- 34: flow meter for steam flow
- 35: steam control valve
- 36: turbine
- 37: generator
- 100: method for determining dependency of OT on IT
- 105: choosing alarmed and/or nonfunctioning
- 110: querying controller 3 responsible for piece 2 of OT
- 120: determining pieces 4 of IT equipment needed by controller 3
- 121: special reasons for a controller 3 needing piece 4 of IT equipment
- 130: determining subset 5 of IT landscape needed by OT equipment 2
- 140: determining potential causes 6 of alarm/non-function of OT equipment 2
- 141: ordering set of causes 6 based on probabilities
- 141a: considering maintenance and/or failure history
- 150: performing remedial action on piece 4 of IT equipment
- 160: performing diagnostic action on piece 4 of IT equipment
- 170: deleting piece 4 of IT equipment from set of potential causes 6
- 180: determining further piece 4', 2' of IT or OT equipment
- 190: checking whether piece 4', 2' of IT or OT equipment is functional
- 200: deleting piece 4 of IT equipment from set of potential causes 6
- 210: determining further piece 4" of IT equipment
- 220: checking whether further piece 4" of IT equipment is functional
- 230: deleting piece 4 of IT equipment from set of potential causes 6
- 240: creating hyperlink 7

## Claims

1. A computer-implemented method (100) for determining the dependency of a given piece (2) of operational technology, OT, equipment in a given industrial plant (1) on information technology, IT, equipment (4), comprising the steps of:
• querying (110), from a distributed control system, DCS, of the industrial plant (1), which of a plurality of controllers (3) is responsible for the piece of OT equipment (2);
• determining (120), from a representation (4a) of the information technology, IT, landscape of the industrial plant (1), pieces (4) of IT equipment on which the correct functioning of the controller (3) is dependent; and
• determining (130) these pieces (4) of IT equipment as the subset (5) of the IT landscape on which the given piece of OT equipment (2) depends.

2. The method (100) of claim 1, wherein
• a piece (2) of OT equipment that is in an alarmed and/or nonfunctional state is chosen (105); and
• the pieces (4) of IT equipment in the determined subset (5) are determined (140) as potential causes (6) for the alarmed and/or nonfunctional state of the piece (2) of OT equipment.

3. The method (100) of claim 2, further comprising: performing (150) at least one remedial action on at least one of the pieces (4) of IT equipment in the set (6) of potential causes.

4. The method (100) of claim 3, wherein the remedial action comprises one or more of:
• rebooting, resetting and/or reconfiguring the piece (4) of IT equipment;
• switching over to a redundant instance of the piece (4) of IT equipment; and
• outputting an instruction to an operator of the industrial plant to replace the piece (4) of IT equipment.

5. The method (100) of any one of claims 2 to 4, further comprising:
• performing (160) a diagnostic action on at least one piece (4) of IT equipment in the set of potential causes (6); and
• if the result of this diagnostic action is that the piece of IT equipment is functional, deleting (170) this piece (4) of IT equipment from the set (6) of potential causes.

6. The method (100) of any one of claims 2 to 5, further comprising:
• determining (180), for at least one piece of IT equipment (4) in the set of potential causes (6), at least one further piece (4', 2') of IT or OT equipment whose correct functioning is dependent on the at least one piece (4) of IT equipment;
• determining (190) whether this further piece (4', 2') of IT or OT equipment is functioning correctly; and
• if this is the case, deleting (200) the at least one piece (4) of IT equipment from the set of potential causes (6).

7. The method (100) of any one of claims 2 to 6, further comprising:
• determining (210), for at least one piece (4) of IT equipment in the set of potential causes (6), at least one further piece (4") of IT equipment on which the correct functioning of the at least one piece (4) of IT equipment is dependent;
• determining (220) whether this further piece (4") of IT equipment is functioning correctly; and
• if this is not the case, deleting (230) the at least one piece (4) of IT equipment from the set of potential causes (6).

8. The method (100) of any one of claims 2 to 7, wherein
• the controller (3) comprises software running on a compute instance; and
• the pieces (4) of IT equipment on which the correct functioning of the controller (3) is dependent comprise at least the hardware platform on which this compute instance is running and a network connection of the compute instance.

9. The method (100) of any one of claims 2 to 8, further comprising: ordering (141) the set of possible causes (6) by the probabilities of the respective pieces (4) of IT equipment failing.

10. The method (100) of claim 9, wherein the probabilities of pieces (4) of IT equipment failing are determined (141a) based at least in part on maintenance histories, and/or failure histories, of these pieces (4) of IT equipment.

11. The method (100) of any one of claims 1 to 10, wherein pieces (4) of IT equipment on which the correct functioning of the controller (3) is dependent comprise (121) pieces (4) of IT equipment that:
• are needed for the controller (3) to be able to obtain data from any required data source; and/or
• are needed for the controller (3) to contact any piece (2) of OT equipment for which it is responsible; and/or
• are needed for the controller (3) to communicate with a superordinate management system in the DCS.

12. The method (100) of any one of claims 1 to 11, further comprising: inserting (240), into a representation (2a) of the OT landscape of the industrial plant (1), at least one hyperlink (7) from at least one piece (2) of OT equipment to at least one piece (4) of IT equipment in the representation (4a) of the IT landscape on which this piece (2) of OT equipment depends.

13. A computer program, comprising machine-readable instructions that, when executed on one or more computers and/or compute instances, cause the one or more computers and/or compute instances to perform the method (100) of any one of claims 1 to 12.

14. A non-transitory machine-readable data carrier and/or a download product with the computer program of claim 13.

15. One or more computers and/or compute instances with the computer program of claim 13, and/or with the machine-readable data carrier and/or download product of claim 14.
